(19) Europäisches Patentamt
European Patent Office
Office européen des brevets

(11) EP 4 079 532 B1

(12) **EUROPEAN PATENT SPECIFICATION**

(45) Date of publication and mention of the grant of the patent:
**08.05.2024 Bulletin 2024/19**

(21) Application number: **20901840.7**

(22) Date of filing: **17.12.2020**

(51) International Patent Classification (IPC):
***B60C 1/00*** *(2006.01)* ***C08C 19/25*** *(2006.01)*
***C08L 7/00*** *(2006.01)* ***C08L 15/00*** *(2006.01)*
***C08K 3/04*** *(2006.01)* ***C08K 3/36*** *(2006.01)*

(52) Cooperative Patent Classification (CPC):
(C-Sets available)
**C08C 19/22; B60C 1/0016; C08C 19/25; C08C 19/44; C08F 236/06; C08L 7/00;**
C08K 2003/2296; C08K 2201/006; Y02T 10/86

(Cont.)

(86) International application number:
**PCT/JP2020/047293**

(87) International publication number:
**WO 2021/125300 (24.06.2021 Gazette 2021/25)**

# (54) RUBBER COMPOSITION AND TIRE

KAUTSCHUKZUSAMMENSETZUNG UND REIFEN

COMPOSITION DE CAOUTCHOUC ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2019 JP 2019229683**

(43) Date of publication of application:
**26.10.2022 Bulletin 2022/43**

(73) Proprietor: **BRIDGESTONE CORPORATION**
**Chuo-ku**
**Tokyo 104-8340 (JP)**

(72) Inventor: **TSUCHIDA Kazutaka**
**Tokyo 104-8340 (JP)**

(74) Representative: **Marks & Clerk LLP**
**15 Fetter Lane**
**London EC4A 1BW (GB)**

(56) References cited:
**EP-A1- 2 223 959**
**WO-A1-2016/140217**
**WO-A1-2019/117266**
**WO-A1-2019/221184**
**WO-A1-2019/235622**
**JP-A- 2010 111 754**
**JP-A- 2012 107 129**
**JP-A- 2012 136 581**
**JP-A- 2017 186 533**
**JP-A- 2017 513 786**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/06, C08F 2/06;**
**C08F 236/06, C08F 4/48;**
**C08L 7/00, C08L 15/00, C08K 3/04, C08K 3/36, C08K 5/09, C08K 3/22, C08K 5/00, C08K 5/47**

## Description

TECHNICAL FIELD

The disclosure relates to a rubber composition and a tire.

BACKGROUND

Generally, a pneumatic tire is required to have high performance that can simultaneously meet a plurality of performance requirements. Above all, a tire member such as a tread is strongly desired to suppress rolling resistance of the tire while being excellent in wear resistance. However, these properties are inconsistent with one another, thus there has been much trial and error to date.

In a rubber composition applied to the tread of the tire, silica is often used as one of reinforcing fillers. However, generally, increasing the content of silica increases a reinforcement property of the tire, which can improve the wear resistance to some extent, but tends to deteriorate a low loss property. If the content of silica is too high, the viscosity of an unvulcanized rubber could increase beyond necessity to deteriorate processability.

Therefore, for the purpose of achieving both reinforcement property and low loss property of the rubber composition, for example, PTL 1 discloses a technique to improve dispersibility of silica by the combined use of silica having a predetermined value or more of a CTAB specific surface area and a predetermined value or more of a BET specific surface area and a mercapto group-containing silane coupling agent.

CITATION LIST

Patent Literature

PTL 1: JP2011140612A

SUMMARY

(Technical Problem)

However, although the technique of PTL 1 can obtain a certain low loss property with the effect of the silane coupling agent, the particle size of silica is large, and further improvement has been required for the reinforcement property.

Therefore, it could be helpful to provide a rubber composition that has achieved both reinforcement property and low loss property at a high level and a tire in which both reinforcement property and low loss property have been achieved at a high level.

(Solution to Problem)

The inventors have studied to solve the aforementioned problems and found that reducing the particle size (primary particle diameter) of silica compared to the conventional one improves the reinforcement property of the rubber composition and increasing the form of aggregates (aggregate) of silica obtains excellent low loss property without reducing the reinforcement property. The inventors have also found that containing a specific modified rubber in the rubber component can increase the dispersibility of silica, which can more improve the reinforcement property and the low loss property, and optimizing the ratio of the content of carbon black in a filler can more improve the reinforcement property.

We provide:

a rubber composition comprising a rubber component and silica, wherein the silica has a CTAB adsorption specific surface area of 250 $m^2$/g or more; the silica has a diameter in the form of aggregates ($D_{CPS}$) and a primary particle diameter ($D_I$), as measured by disk centrifugal particle size analysis, that satisfy:

$$700 \geq D_{CPS}^3/D_I^3 \geq 300 \qquad (1);$$

the rubber component contains at least one selected from natural rubber and polyisoprene rubber, and at least one selected from modified butadiene rubber and modified styrene butadiene rubber;

the carbon black is contained by a mass ratio of 70% or more with respect to the total mass content of the carbon black and the silica; and
the at least one selected from modified butadiene rubber and modified styrene butadiene rubber is modified by at least one selected from the group consisting of:

a hydrocarbyloxysilane compound represented by Formula (IV):

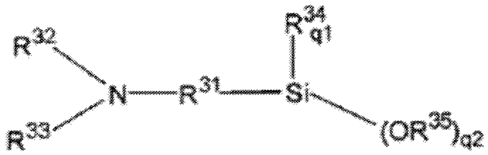

... (IV)

[wherein: q1+q2=3 (where q1 is an integer of 0 to 2, and q2 is an integer of 1 to 3); $R^{31}$ represents a divalent aliphatic group or alicyclic hydrocarbon group having 1 to 20 carbon atoms or a divalent aromatic hydrocarbon group having 6 to 18 carbon atoms; $R^{32}$ and $R^{33}$ each independently represent a hydrolyzable group, a monovalent aliphatic group or alicyclic hydrocarbon group having 1 to 20 carbon atoms or a monovalent aromatic hydrocarbon group having 6 to 18 carbon atoms; $R^{34}$, which may be the same or different when the number of q1 is two, represents a monovalent aliphatic group or alicyclic hydrocarbon group having 1 to 20 carbon atoms or a monovalent aromatic hydrocarbon group having 6 to 18 carbon atoms; and $R^{35}$, which may be the same or different when the number of q2 is two or more, represents a monovalent aliphatic group or alicyclic hydrocarbon group having 1 to 20 carbon atoms or a monovalent aromatic hydrocarbon group having 6 to 18 carbon atoms];
a hydrocarbyloxysilane compound represented by Formula (V):

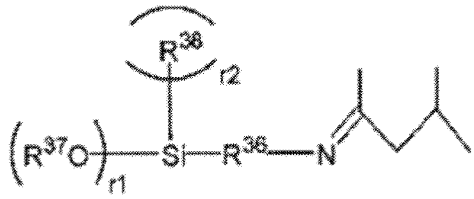

... (V)

[wherein: r1+r2=3 (where r1 is an integer of 1 to 3, and r2 is an integer of 0 to 2); $R^{36}$ represents a divalent aliphatic group or alicyclic hydrocarbon group having 1 to 20 carbon atoms or a divalent aromatic hydrocarbon group having 6 to 18 carbon atoms; $R^{37}$, which may be the same or different when the number of r1 is two or more, represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic group or alicyclic hydrocarbon group having 1 to 20 carbon atoms or a monovalent aromatic hydrocarbon group having 6 to 18 carbon atoms; and $R^{38}$, which may be the same or different when the number of r2 is two, represents a hydrocarbyloxy group having 1 to 20 carbon atoms, a monovalent aliphatic group or alicyclic hydrocarbon group having 1 to 20 carbon atoms or a monovalent aromatic hydrocarbon group having 6 to 18 carbon atoms];
a hydrocarbyloxysilane compound represented by Formula (III):

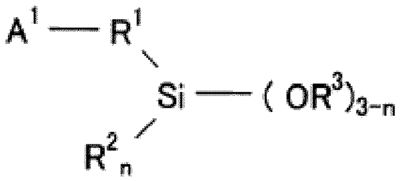

------ (III)

[wherein: $A^1$ represents a monovalent group having at least one functional group selected from (thio)epoxy, (thio)isocyanate, (thio)ketone, (thio)aldehyde, imine, amide, isocyanuric acid trihydrocarbylester, (thio)carboxylate ester, a metallic salt of (thio)carboxylic acid, carboxylic anhydride, carboxylic halide, and dihydrocarbonate carbylester; $R^1$ represents a single bond or a divalent non-active hydrocarbon group; $R^2$ and $R^3$ each independently represent a monovalent aliphatic hydrocarbon group having 1 to 20 carbon atoms or a monovalent

aromatic hydrocarbon group having 6 to 18 carbon atoms; n is an integer of 0 to 2; $R^2$ may be the same or different when there are a plurality of $R^2$, $OR^3$ may be the same or different when there are a plurality of $OR^3$, and the molecule does not contain active proton and onium salts];

a coupling agent represented by Formula (VI):

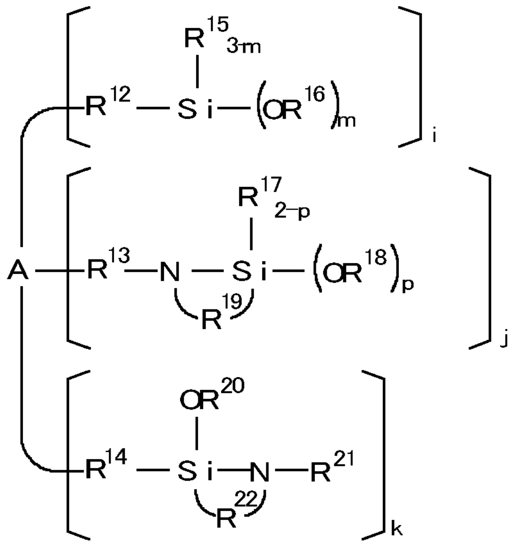

· · · · (VI)

[wherein: $R^{12}$, $R^{13}$, and $R^{14}$ each independently represent a single bond or an alkylene group having 1 to 20 carbon atoms; $R^{15}$, $R^{16}$, $R^{17}$, $R^{18}$, and $R^{20}$ each independently represent an alkyl group having 1 to 20 carbon atoms; $R^{19}$ and $R^{22}$ each independently represent an alkylene group having 1 to 20 carbon atoms; $R^{21}$ represents an alkyl group or trialkylsilyl group having 1 to 20 carbon atoms; m represents an integer of 1 to 3; p represents 1 or 2; $R^{12}$ to $R^{22}$, m and p are independent from one another when there are a plurality thereof; i, j, and k each independently represent an integer of 0 to 6 with (i+j+k) being an integer of 3 to 10; and A represents a hydrocarbon group or an organic group having 1 to 20 carbon atoms, the organic group having at least one atom selected from the group consisting of an oxygen atom, a nitrogen atom, a silicon atom, a sulfur atom, and a phosphorus atom, without having active hydrogen];

a coupling agent represented by Formula (VII):

$$(R_3)_aZX_b \ldots \qquad (VII)$$

[wherein: Z represents tin or silicon; $(R_3)$ is selected from the group consisting of alkyl having 1 to 20 carbon atoms, cycloalkyl having 3 to 20 carbon atoms, aryl having 6 to 20 carbon atoms, and aralkyl having 7 to 20 carbon atoms; X represents chlorine or bromine; a is 0 to 3, b is 1 to 4, where a+b=4];

lithioamine represented by Formula (VIII):

$$(AM)Li(Q)_y \ldots \qquad (VIII)$$

[wherein: y is 0 or 0.5 to 3; (Q) is a solubilized component selected from the group consisting of hydrocarbon, ethers, amines, and a mixture thereof; and (AM) is a general formula [I]

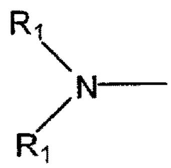

· · · · [I]

(where $R_1$ independently represents an alkyl group having 1 to 12 carbon atoms, a cycloalkyl group, or an aralkyl group) or a general formula [II]

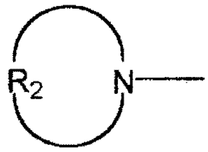 · · · · [II]

(where (R2) represents: an alkylene group having 3 to 16 methylene groups; a substituted alkylene group having, as a substituent, linear or branched alkyl having 1 to 12 carbon atoms, cycloalkyl, bicycloalkyl, aryl, aralkyl; an oxydiethylene group; or an N-alkylamino-alkylene group)]; and
vinylpyridine.

The above configuration can achieve both reinforcement property and low loss property at a high level.
Moreover, for my rubber composition, it is more preferable that the at least one selected from modified butadiene rubber and modified styrene butadiene rubber is modified by at least one selected from the group consisting of: N,N-bis(trimethylsilyl)-3-[diethoxy(methyl)silyl]propylamine; N-(1,3-dimethylbutylidene)-3-triethoxysilyl-1-propaneamine; tetrakis(3-trimethoxysilylpropyl)-1,3-propanediamine; tin tetrachloride; a reactant of hexamethyleneimine and n-butyllithium; 4-vinylpyridine; and 2-vinylpyridine. This is because the reinforcement property and the low loss property can be further improved.
In addition, for my rubber composition, it is preferable that the total content of the carbon black and the silica is 40 to 100 parts by mass per 100 parts by mass of the rubber component. This is because both reinforcement property and low loss property can be achieved at a higher level.
My tire comprises the rubber composition of the aforementioned disclosure.
The above configuration can achieve both reinforcement property and low loss property at a high level.

(Advantageous Effect)

We can provide a rubber composition that has achieved both reinforcement property and low loss property at a high level. We can also provide a tire in which both reinforcement property and low loss property have been achieved at a high level.

DETAILED DESCRIPTION

The following specifically describes one of the disclosed embodiments.

<Rubber composition>

My rubber composition is a rubber composition comprising a rubber component, carbon black, and silica.
The following describes respective components that constitute the rubber composition.

(Rubber component)

My rubber composition comprises a rubber component.
The rubber component contains at least one selected from natural rubber (NR) and polyisoprene rubber (IR) and at least one selected from modified butadiene rubber (modified BR) and modified styrene butadiene rubber (modified SBR).
Containing the at least one selected from modified BR and modified SBR can increase the interaction with the silica to improve the dispersibility of the silica, resulting in further improvement of the reinforcement property and the low loss property of the rubber component. Containing the at least one selected from NR and IR can increase the elastic modulus of the rubber component to improve the reinforcement property.
The rubber components other than the above-described rubbers can be appropriately contained according to the required performance. For example, from the viewpoint that excellent reinforcement property and low loss property can be obtained, it is preferable that a diene-based rubber is contained.
Here, the kinds of the diene-based rubber include, in addition to the above-described natural rubber (NR) and polyisoprene rubber (IR), a butadiene rubber (BR), a styrene butadiene rubber (SBR), a styrene isoprene butadiene rubber (SIBR), a chloroprene rubber (CR), an acrylonitrile butadiene rubber (NBR), etc.
The kinds of the non-diene based rubber include an ethylene propylene diene rubber (EPDM), an ethylene propylene rubber (EPM), a butyl rubber (IIR), etc.
One of these rubbers may be used alone, or two or more of these rubbers may be blend and used. Such rubber

may be an unmodified rubber or a modified rubber.

Moreover, the rubber component preferably contains 40 mass% or more of the at least one selected from natural rubber and polyisoprene rubber, and more preferably contains 50 mass% or more of the at least one selected from natural rubber and polyisoprene rubber. This is because the reinforcement property of the rubber composition can be more improved.

From the viewpoint to maintain the low loss property at a high level, the content of the at least one selected from the natural rubber and the polyisoprene rubber is preferably 90 mass% or less, preferably 85 mass% or less, and more preferably 80 mass% or less.

The positions of modified functional groups in the modified butadiene rubber and the modified styrene butadiene rubber are not particularly limited and may be, for example, at end of the main chain, in the main chain, or only in the rage of 1/4 of the total chain length from the end of the main chain. The number of the modified functional groups is also not particularly limited and may be appropriately selected according to the purpose.

The at least one selected from the group consisting of modified butadiene rubber and modified styrene butadiene rubber is modified by at least one selected from the group consisting of hydrocarbyloxysilane compounds represented by Formulae (IV), (V), and (III), coupling agents represented by Formulae (VI) and (VII), lithioamine represented by Formula (VIII), and vinylpyridine.

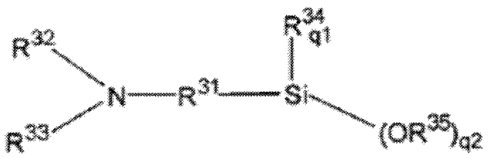

· · · (IV)

wherein: q1+q2=3 (where q1 is an integer of 0 to 2, and q2 is an integer of 1 to 3); $R^{31}$ represents a divalent aliphatic group or alicyclic hydrocarbon group having 1 to 20 carbon atoms or a divalent aromatic hydrocarbon group having 6 to 18 carbon atoms; $R^{32}$ and $R^{33}$ each independently represent a hydrolyzable group, a monovalent aliphatic group or alicyclic hydrocarbon group having 1 to 20 carbon atoms or a monovalent aromatic hydrocarbon group having 6 to 18 carbon atoms; $R^{34}$, which may be the same or different when the number of q1 is two, represents a monovalent aliphatic group or alicyclic hydrocarbon group having 1 to 20 carbon atoms or a monovalent aromatic hydrocarbon group having 6 to 18 carbon atoms; and $R^{35}$, which may be the same or different when the number of q2 is two or more, represents a monovalent aliphatic group or alicyclic hydrocarbon group having 1 to 20 carbon atoms or a monovalent aromatic hydrocarbon group having 6 to 18 carbon atoms.

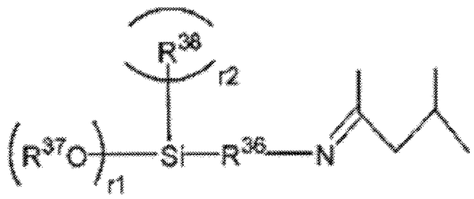

· · · (V)

wherein: r1+r2=3 (where r1 is an integer of 1 to 3, and r2 is an integer of 0 to 2); $R^{36}$ represents a divalent aliphatic group or alicyclic hydrocarbon group having 1 to 20 carbon atoms or a divalent aromatic hydrocarbon group having 6 to 18 carbon atoms; $R^{37}$, which may be the same or different when the number of r1 is two or more, represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic group or alicyclic hydrocarbon group having 1 to 20 carbon atoms or a monovalent aromatic hydrocarbon group having 6 to 18 carbon atoms; and $R^{38}$, which may be the same or different when the number of r2 is two, represents a hydrocarbyloxy group having 1 to 20 carbon atoms, a monovalent aliphatic group or alicyclic hydrocarbon group having 1 to 20 carbon atoms or a monovalent aromatic hydrocarbon group having 6 to 18 carbon atoms.

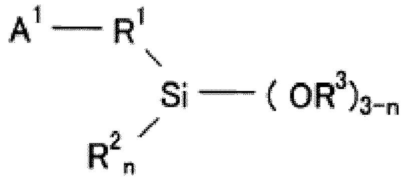

------ (III)

wherein: $A^1$ represents a monovalent group having at least one functional group selected from (thio)epoxy, (thio)isocyanate, (thio)ketone, (thio)aldehyde, imine, amide, isocyanuric acid trihydrocarbylester, (thio)carboxylate ester, a metallic salt of (thio)carboxylic acid, carboxylic anhydride, carboxylic halide, and dihydrocarbonate carbylester; $R^1$ represents a single bond or a divalent non-active hydrocarbon group; $R^2$ and $R^3$ each independently represent a monovalent aliphatic hydrocarbon group having 1 to 20 carbon atoms or a monovalent aromatic hydrocarbon group having 6 to 18 carbon atoms; n is an integer of 0 to 2; $R^2$ may be the same or different when there are a plurality of $R^2$, $OR^3$ may be the same or different when there are a plurality of $OR^3$, and the molecule does not contain active proton and onium salts.

In Formula (III), among the functional groups in $A^1$, imine encompasses ketimine, aldimine, and amidin, and (thio)carboxylate ester encompasses unsaturated carboxylate ester such as acrylate and methacrylate. The metal of the metallic salt of (thio)carboxylic acid can include alkali metal, alkaline earth metal, Al, Sn, Zn, etc. The divalent non-active hydrocarbon group in $R^1$ can preferably include an alkylene group having 1 to 20 carbon atoms. This alkylene group may be any of straight-chain, branched, or cyclic one, but, in particular, preferably straight-chain one. Examples of this straight-chain alkylene group includes a methylene group, an ethylene group, a trimethylene group, a tetramethylene group, a pentamethylene group, a hexamethylene group, an octamethylene group, a decamethylene group, a dodecamethylene group, etc. $R^2$ and $R^3$ can include an alkyl group having 1 to 20 carbon atoms, an alkenyl group having 2 to 18 carbon atoms, an aryl group having 6 to 18 carbon atoms, an aralkyl group having 7 to 18 carbon atoms, etc. Here, the above alkyl group and alkenyl group may be any of straight-chain, branched, or cyclic ones, and their examples include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, etc. This aryl group may have a substituent such as a lower alkyl group on the aromatic ring, and its example includes a phenyl group, a tolyl group, a xylyl group, a naphthyl group, etc. Moreover, this aralkyl group may have a substituent such as a lower alkyl group on the aromatic ring, and its example includes a benzyl group, a phenethyl group, a naphthylmethyl group, etc. n is an integer of 0 to 2, but preferably 0, and it is necessary that this molecule does not contain active proton and onium salts.

The hydrocarbyloxysilane compound represented by Formula (III) can preferably include, for example, as a (thio)epoxy group-containing hydrocarbyloxysilane compound, 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, 2-(3,4-epoxycyclohexyl)trimethoxysilane, and one obtained by substituting a thioepoxy group for the epoxy group in such compound, but among them, 3-glycidoxypropyltrimethoxysilane and 2-(3,4-epoxycyclohexyl)trimethoxysilane are particularly preferable.

As an imine group-containing hydrocarbyloxysilane compound, it can preferably include N-(1,3-dimethylbutylidene)-3-(triethoxysilyl)-1-propaneamine, N-(1-methylethylidene)-3-(triethoxy silyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, and a trimethoxysilyl compound, a methyldiethoxysilyl compound, an ethyldiethoxysilyl compound, a methyldimethoxysilyl compound, an ethyldimethoxysilyl compound, etc. corresponding to these triethoxysilyl compounds, but among them, N-(1-methylpropylidene)-3-(triethoxysilyl)-1-propaneamine and N-(1,3-dimethylbutylidene)-3-(triethoxysilyl)-1-propaneamine are particularly preferable.

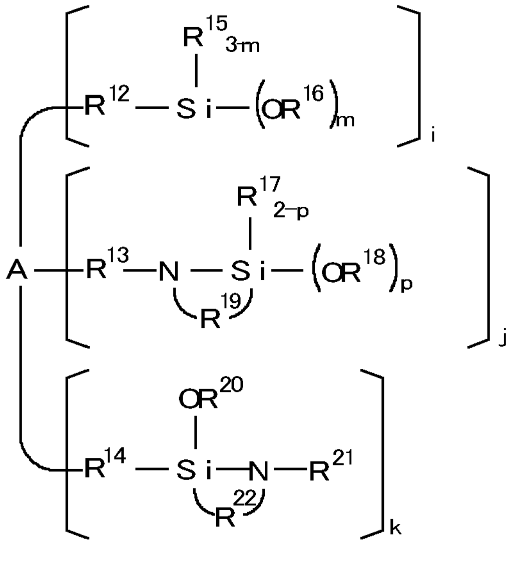

· · · · (VI)

wherein: $R^{12}$, $R^{13}$, and $R^{14}$ each independently represent a single bond or an alkylene group having 1 to 20 carbon atoms; $R^{15}$, $R^{16}$, $R^{17}$, $R^{18}$, and $R^{20}$ each independently represent an alkyl group having 1 to 20 carbon atoms; $R^{19}$ and $R^{22}$ each independently represent an alkylene group having 1 to 20 carbon atoms; $R^{21}$ represents an alkyl group or trialkylsilyl group having 1 to 20 carbon atoms; m represents an integer of 1 to 3; p represents 1 or 2; $R^{12}$ to $R^{22}$, m and p are independent from one another when there are a plurality thereof; i, j, and k each independently represent an integer of 0 to 6 with (i+j+k) being an integer of 3 to 10; and A represents a hydrocarbon group and an organic group having 1 to 20 carbon atoms, the organic group having at least one atom selected from the group consisting of an oxygen atom, a nitrogen atom, a silicon atom, a sulfur atom, and a phosphorus atom, without having active hydrogen.

Here, it is preferable that the coupling agent represented by Formula (VI) is at least one selected from the group consisting of tetrakis[3-(2,2-dimethoxy-1-aza-2-silacyclopentane)propyl]-1,3-propanediamine, tetrakis(3-trimethoxysilylpropyl)-1,3-propanediamine, and tetrakis(3-trimethoxysilylpropyl)-1,3-bisaminomethylcyclohexane. In this case, the reinforcement property can be more improved.

$(R_3)_aZX_b$ ... (VII)

wherein: Z represents tin or silicon; $(R_3)$ is selected from the group consisting of alkyl having 1 to 20 carbon atoms, cycloalkyl having 3 to 20 carbon atoms, aryl having 6 to 20 carbon atoms, and aralkyl having 7 to 20 carbon atoms; X represents chlorine or bromine; a is 0 to 3, b is 1 to 4, where a+b=4.

Here, the coupling agent represented by Formula (VII) is preferably tin tetrachloride, $(R_3)SnCl_3$, $(R3)_2SnCl_2$, $(R_3)_3SnCl$, etc., and among them, tin tetrachloride is particularly preferable.

$(AM)Li(Q)_y$ ... (VIII)

wherein: y is 0 or 0.5 to 3; (Q) is a solubilized component selected from the group consisting of hydrocarbon, ethers, amines, and a mixture thereof; and (AM) is a general formula [I]

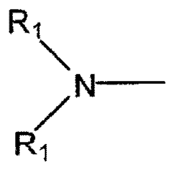

· · · · [I]

(where $(R_1)$ independently represents an alkyl group having 1 to 12 carbon atoms, a cycloalkyl group, or an aralkyl group) or a general formula [II]

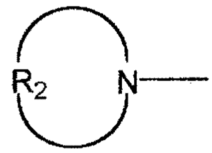

· · · · [II]

(where ($R_2$) represents: an alkylene group having 3 to 16 methylene groups; a substituted alkylene group having, as a substituent, linear or branched alkyl having 1 to 12 carbon atoms, cycloalkyl, bicycloalkyl, aryl, aralkyl; an oxydiethylene group; or an N-alkylamino-alkylene group).

The presence of Q in Formula (VIII) enables lithioamine to dissolve in a hydrocarbon solvent. Q contains dienyl or vinyl aromatic polymers or copolymers having a degree of polymerization consisting of a polymerization unit of 3 to about 300. These polymers and copolymers include polybutadiene, polystyrene, polyisoprene, and their copolymers. Other examples of Q include polar ligand (for example, tetrahydrofuran (THF), tetramethylethylenediamine (TMEDA), etc.).

Moreover, the lithioamine represented by Formula (VIII) can be its mixture with an organic alkali metal. This organic alkali metal is preferably selected from the group consisting of compounds represented by general formulae ($R_4$)M, ($R_5$)OM, ($R_6$)C(O)OM, ($R_7$)($R_8$)NM, and ($R_9$)$SO_3$M, and here, each of ($R_4$), ($R_5$), ($R_6$), ($R_7$), ($R_8$), and ($R_9$) is selected from the group consisting of alkyl, cycloalkyl, alkenyl, aryl, and phenyl having about 1 to about 12 carbon atoms. The metal component M is selected from the group consisting of Na, K, Rb, and Cs. M is preferably Na or K. Moreover, the mixture can preferably also contain the organic alkali metal at a mixing ratio consisting of an equivalent of about 0.5 to about 0.02 per 1 equivalent of lithium in the lithioamine. In particular, (E) is preferably used when obtaining a target polymer with high styrene content.

In the mixture of the lithioamine and the organic alkali metal, a chelating agent can be used as an auxiliary agent to prevent the polymerization from being heterogeneous. The useful chelating agent includes, for example, tetramethylethylenediamine (TMEDA), oxolanyl cyclic acetals, and cyclic oligomeric oxolanyl alkanes. In particular, cyclic oligomeric oxolanyl alkanes are preferable, and its specific example is 2,2-bis(tetrahydrofuryl)propane.

The vinylpyridine includes, for example, 2-vinylpyridine and 4-vinylpyridine.

Moreover, it is preferable that, among the above-described various modifiers, the at least one selected from modified butadiene rubber and modified styrene butadiene rubber is modified by at least one selected from the group consisting of N,N-bis(trimethylsilyl)-3-[diethoxy(methyl)silyl]propylamine, N-(1,3-dimethylbutylidene)-3-triethoxysilyl-1-propanamine, 3-glycidoxypropyltrimethoxysilane, tetrakis(3-trimethoxysilylpropyl)-1,3-propanediamine, tin tetrachloride, a reactant of hexamethyleneimine and n-butyllithium, 4-vinylpyridine, and 2-vinylpyridine. This is because more excellent reinforcement property and low loss property can be achieved.

The total content of the at least one selected from modified butadiene rubber and modified styrene butadiene rubber in the rubber component is, from the viewpoint that both reinforcement property and low loss property can be achieved at a higher level, preferably 10 mass% or more, more preferably 20 mass% or more, further preferably 25 mass% or more, and particularly preferably 30 mass% or more. From the viewpoint of the processability of the rubber composition, the total content of the at least one selected from modified butadiene rubber and modified styrene butadiene rubber is 60 mass% or less, preferably 50 mass% or less, and more preferably 45 mass% or less.

(Silica)

My rubber composition comprises silica in addition to the above-described rubber component.

The silica has a CTAB adsorption specific surface area (CTAB) of 250 $m^2/g$ or more and has a diameter in the form of aggregates ($D_{CPS}$) and a primary particle diameter ($D_I$), as measured by disc centrifugal particle size analysis, that satisfy:

$$700 \geq D_{CPS}^3/D_I^3 \geq 300 \qquad (1).$$

The disc centrifugal particle size analyzer used for measuring the diameter in the form of aggregates ($D_{CPS}$) is not particularly limited, and $D_{CPS}$ can be measured using a commercially available analyzer. For example, the disc centrifugal particle size distribution analyzer CPS Disc Centrifuge from CPS Instruments can be used. The measurement condition is that silica is added to water at a ratio of 3 wt% and sonicated to obtain a silica suspension. For this sample, the particle size distribution can be measured at a rotational velocity of 20000 rpm using the disc centrifugal particle size distribution analyzer. The measurement may have variation, and thus, the correction may be appropriately made when comparing silica.

The primary particle diameter can be calculated as:

$$D_I = 6000/(CTAB \times \rho) \qquad (2)$$

$$\rho: 2.2\ g/cm^3.$$

Conventionally, in order to improve the low heat generating property, the wear resistance, and the fatigue cracking resistance, low structuring has been made to decrease the degree of development of an aggregate structure of carbon black, the wear resistance and the fatigue cracking property have been improved by making the carbon black have a fine particle size, and deterioration of heat generation has been suppressed by broadening the distribution of the form of aggregates. However, even when the form of the carbon black is controlled as such, the wear resistance and the fatigue cracking resistance were likely to deteriorate. This is thought to be due to the increase in a large particle component by broadening the distribution of the form of aggregates of the carbon black.

In contrast, in the disclosure, a vulcanized rubber excellent in the reinforcement property without sacrificing the wear resistance and the fatigue cracking resistance can be obtained. This reason is uncertain, but it is inferred to be due to the following reasons.

The heat generation in the vulcanized rubber generally occurs when fillers such as carbon black and silica contained in the vulcanized rubber rub against one another in the rubber. Thus, as described above, in the environment where the large particle component of the carbon black increases, the low heat generating property tends to deteriorate. Therefore, it is thought that by using silica with a fine particle size such as the primary particle diameter satisfying Formula (2), the silica with a fine particle size enters the gap between the carbon blacks to maintain the state having the low heat generating property without affecting the aggregation of the particles, while the rubber strongly interacts with the carbon black and the silica in a fracture area such as wear and crack of the vulcanized rubber, which can improve the reinforcement property.

However, it is thought that, when the particle size of the silica is too small, the reduction in the low heat generating property is caused. Therefore, in the disclosure, the silica satisfies the above condition of Formula (1), thus the particle size (primary particle diameter) of the silica is reduced compared to the conventional one to increase the reinforcement property, while the increase in the form of aggregates (aggregate) of the silica can effectively suppress the deterioration of the low loss property, which can achieve both reinforcement property and low loss property of the rubber composition at a high level.

When $D_{CPS}^3/D_I^3$ is less than 300, the particle size of the silica is not small enough and the form of aggregates of the silica is not large enough, thus making impossible to achieve both reinforcement property and low loss property at a high level. On the other hand, when $D_{CPS}^3/D_I^3$ exceeds 700, the particle size of the silica becomes too small, thus reducing the low loss property.

In order to increase the reinforcement property of the tire, it is effective to reduce the particle size (primary particle diameter) of the silica contained in the rubber composition, while as the particle size of the silica reduces, the distance between the aggregates (forms of aggregates) of the silica reduces, which increases the network effect to deteriorate the low loss property. Therefore, in the disclosure, reducing the primary particle diameter ($D_I$) of the silica compared to the conventional one improves the reinforcement property of the rubber composition, and increasing the diameter in the form of aggregates ($D_{CPS}$) formed from the primary particles of the silica can suppress the deterioration of the low loss property due to the reduction in the distance between the aggregates, resulting in achievement of the excellent low loss property without reducing the reinforcement property.

Here, the kind of the silica is not particularly limited. For example, it includes a wet silica, a colloidal silica, a calcium silicate, an aluminum silicate, etc.

Among the above-described ones, the silica is preferably the wet silica, and among such wet silicas, the silica is more preferably a precipitated silica. This is because such silica has high dispersibility and can more improve the low loss property and the reinforcement property of the rubber composition. The precipitated silica is a silica obtained by proceeding with the reaction of the reaction solution at a relatively high temperature in a pH range from neutral to alkaline in the early stage of manufacture to grow the primary particles of the silica and then controlling the reaction solution to an acidic side to aggregate the primary particles.

The CTAB adsorption specific surface area (specific surface area by cetyltrimethylammonium bromide adsorption) of the silica needs to be 250 $m^2/g$ or more from the viewpoint to achieve high reinforcement property, and it is preferably 251 $m^2/g$ or more, more preferably 252 $m^2/g$ or more, and further preferably 253 $m^2/g$ or more from the similar viewpoint. From the point to more certainly suppress the deterioration of the low loss property, the CTAB adsorption specific surface area of the silica is preferably 290 or less, more preferably 285 or less, further preferably 282 or less, and particularly preferably 270 or less.

The CTAB adsorption specific surface area means a value measured compliant with ASTM D3765-92. However, the CTAB adsorption specific surface area is a specific surface area ($m^2/g$) calculated from the adsorbed amount of

CTAB by setting the adsorption cross sectional area per molecule of cetyltrimethylammonium bromide for the silica surface to 0.35 $nm^2$.

The content of the silica is not particularly limited and can be appropriately selected according to the required performance. However, from the viewpoint that the reinforcement property and the low loss property can be achieved at a higher level, the content of the silica is preferably 5 to 50 parts by mass, more preferably 5 to 40 parts by mass, and further preferably 5 to 30 parts by mass per 100 parts by mass of the rubber component.

(Carbon black)

My rubber composition comprises carbon black in addition to the above-described rubber component and silica.

Here, the carbon black is not particularly limited. For example, any hard carbon and soft carbon manufactured by the oil furnace method can be used. Among them, from the viewpoint to achieve more excellent low loss property and reinforcement property, it is preferable to use carbon black with GPF, FEF, SRF, HAF, ISAF, IISAF, or SAF grade.

The content of the carbon black is preferably 20 to 60 parts by mass, more preferably 25 to 55 parts by mass, and particularly preferably 30 to 50 parts by mass per 100 parts by mass of the rubber component. Setting the content of the carbon black to 20 parts by mass or more per 100 parts by mass of the rubber component can obtain high reinforcement property, and setting the content of the carbon black to 60 parts by mass or less can improve the low loss property.

Moreover, in my rubber composition, from the viewpoint that both reinforcement property and low loss property can be achieve at a higher level, the total content of the carbon black and the silica is preferably 40 to 100 parts by mass and more preferably 40 to 80 parts by mass per 100 parts by mass of the rubber component. Setting the total content of the carbon black and the silica to 40 parts by mass or more per 100 parts by mass of the rubber component can obtain more excellent reinforcement property, and setting the total content of the carbon black and the silica to 100 parts by mass or less per 100 parts by mass of the rubber component can certainly suppress the deterioration of the low loss property.

In the disclosure, the carbon black needs to be contained by a mass ratio of 70% or more, preferably 80% or more, with respect to the total mass content of the carbon black and the silica (the mass content of the carbon black/( the mass content of the carbon black + the mass content of the silica)). This can certainly increase the reinforcement property of my rubber composition.

From the viewpoint to suppress the deterioration of the low loss property, it is preferable that the carbon black is contained by a mass ratio of 95% or less, with respect to the total mass content of the carbon black and the silica.

Moreover, in my rubber composition, the nitrogen adsorption specific surface area ($N_2SA$) of the carbon black is preferably 115 $m^2/g$ or less, more preferably 110, further preferably 100 or less, further preferably 93 $m^2/g$ or less, further preferably 83 $m^2/g$ or less, further preferably 73 $m^2/g$ or less, and particularly preferably 69 $m^2/g$ or less. This is because the use in combination with the silica that satisfies the above condition of Formula (1) can achieve both reinforcement property and low loss property at a higher level.

(Other components)

My rubber composition can comprise other components to the extent that they do not impair the effect of the disclosure, in addition to the above-described rubber component, carbon black, and silica.

Other components can appropriately include additives usually used in the rubber industry, such as, for example, a filler other than the carbon black and silica, a thermoplastic resin, an age resistor, a crosslinking accelerator, a crosslinking agent, a crosslinking coagent, an antiozonant, and a surfactant.

The fillers other than the carbon black and silica include, for example, an inorganic compound represented by

$$nM \bullet xSiO_Y \bullet zH_2O \qquad (I)$$

[wherein, M is at least one selected from metals selected from the group consisting of aluminum, magnesium, titanium, calcium, and zirconium, oxides or hydroxides of these metals, and their hydrates, and carbonates of these metals; n, x, y, and z are an integer of 1 to 5, an integer of 0 to 10, an integer of 2 to 5, and an integer of 0 to 10, respectively.]

The inorganic compound of Formula (I) can include alumina ($Al_2O_3$) such as $\gamma$-alumina and $\alpha$-alumina; alumina monohydrate ($Al_2O_3 \bullet H_2O$) such as boehmite and diaspore; aluminum hydroxide [$Al(OH)_3$] such as gibbsite and bayerite; aluminum carbonate [$Al_2(CO_3)_3$], magnesium hydroxide [$Mg(OH)_2$], magnesium oxide ($MgO$), magnesium carbonate ($MgCO_3$), talc ($3MgO \bullet 4SiO_2 \bullet H_2O$), attapulgite ($5MgO \bullet 8SiO_2 \bullet 9H_2O$), titanium white ($TiO_2$), titanium black ($TiO_{2n-1}$), calcium oxide ($CaO$), calcium hydroxide [$Ca(OH)_2$], magnesium aluminum oxide ($MgO \bullet Al_2O_3$), clay ($Al_2O_3 \bullet 2SiO_2$), kaolin ($Al_2O_3 \bullet 2SiO_2 \bullet 2H_2O$), pyrophyllite ($Al_2O_3 \bullet 4SiO_2 \bullet H_2O$), bentonite ($Al_2O_3 \bullet 4SiO_2 \bullet 2H_2O$), magnesium silicate ($Mg_2SiO_4$,

$MgSiO_3$, etc.), calcium aluminum silicate ($Al_2O_3$•CaO•2$SiO_2$, etc.), calcium magnesium silicate ($CaMgSiO_4$), calcium carbonate ($CaCO_3$), zirconium oxide ($ZrO_2$), zirconium hydroxide [$ZrO(OH)_2$•$nH_2O$], zirconium carbonate [$Zr(CO_3)_2$], hydrogen that corrects the charge such as various kinds of zeolite, crystalline aluminosilicate including alkali metal or alkaline earth metal, etc.

It is preferable that my rubber composition further comprises a thermoplastic resin. Comprising the thermoplastic resin can more improve the low loss property and can also improve the braking performance when using the rubber composition for the tire.

Moreover, the content of the thermoplastic resin is not particularly limited, but it is preferably 5 to 50 parts by mass per 100 parts by mass of the rubber component.

The kind of the thermoplastic resin is not particularly limited. It includes, for example, a C5-based resin, a C9-based resin, a C5 to C9-based resin, a dicyclopentadiene-based resin, a rosin-based resin, an alkylphenol-based resin, or a terpenephenol-based resin.

Here, the C5-based resin means a C5-based synthetic petroleum resin, which is a solid polymer obtained by polymerizing C5 fraction using Friedel-Crafts catalyst such as $AlCl_3$ and $BF_3$. Specifically, a copolymer mainly composed of isoprene, cyclopentadiene, 1,3-pentadiene, 1-pentene, etc., a copolymer of 2-pentene and dicyclopentadiene, and a polymer mainly composed of 1,3-pentadiene are exemplified.

The C9-based resin means a C9-based synthetic petroleum resin, which is a solid polymer obtained by polymerizing C9 fraction using Friedel-Crafts catalyst such as $AlCl_3$ and $BF_3$. Specifically, a copolymer mainly composed of indene, methylindene, $\alpha$-methylstyrene, vinyl toluene, etc. is exemplified.

Moreover, the C5 to C9-based resin means a C5 to C9-based synthetic petroleum resin, which is a solid polymer obtained by polymerizing C5 to C9 fraction using Friedel-Crafts catalyst such as $AlCl_3$ and $BF_3$. For example, a copolymer mainly composed of styrene, vinyl toluene, $\alpha$-methylstyrene, indene, etc. is included. In the disclosure, as this C5 to C9-based resin, a resin with few components of C9 or higher is preferable from the viewpoint of the compatibility with the rubber component. Here, "few components of C9 or higher" means that the component of C9 or higher in the total amount of resin is less than 50 mass%, and preferably 40 mass% or less.

The dicyclopentadiene-based resin means a petroleum resin using dicyclopentadiene in the C5 fraction as a main raw material. It includes, for example, the product name "MARUKAREZ M" series (M-890A, M-845A, M-990A, etc.) from Maruzen Petrochemical Co., Ltd.

The rosin-based resin includes, as a natural resin rosin, a gum rosin, a tall oil rosin, and a wood rosin, which are included in raw rosin or tall oil, and, as a modified rosin, a rosin derivative, and a modified rosin derivative, for example, a polymerized rosin and its partially hydrogenated rosin; a glycerin ester rosin and its partially hydrogenated rosin and completely hydrogenated rosin; a pentaerythritol ester rosin and its partially hydrogenated rosin and polymerized rosin.

The alkylphenol-based resin means a phenol-based resin having an alkyl group. It includes, for example, an alkylphenol-acetylene resin such as a p-tert-butylphenol-acetylene resin, and an alkylphenol-formaldehyde resin with low degree of polymerization.

Moreover, the terpenephenol-based resin is a resin that can be obtained by reacting terpenes and various kinds of phenols using Friedel-Crafts catalyst or by further condensing it with formalin. Terpenes as raw material are not particularly limited but are preferably monoterpene hydrocarbon such as $\alpha$-pinene and limonene, more preferably the one including $\alpha$-pinene, and particularly preferably $\alpha$-pinene. In the disclosure, a terpenephenol-based resin with a high ratio of phenolic components is preferable. One or two or more of these resins can be used together.

Moreover, it is preferable that the rubber composition comprises a novolac-type phenolic resin as a phenolic resin. Comprising the novolac-type phenolic resin can increase the elastic modulus in the rubber composition to improve the steering stability without using the curing agent and without reducing the wet performance.

As the age resistor, the publicly known one can be used, and the age resistor is not particularly limited. It can include, for example, a phenolic-based age resistor, an imidazole-based age resistor, and an amine-based age resistor. One or two or more of these age resistors can be used together.

As the crosslinking accelerator, the publicly known one can be used, and the crosslinking accelerator is not particularly limited. It includes, for example, a thiazole vulcanization accelerator such as 2-mercaptobenzothiazole and dibenzothiazyl disulfide; a sulfenamide vulcanization accelerator such as N-cyclohexyl-2-benzothiazyl sulfenamide and N-t-butyl-2-benzothiazyl sulfenamide; a guanidine vulcanization accelerator such as diphenylguanidine; a thiuram vulcanization accelerator such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; a dithiocarbamate vulcanization accelerator such as zinc dimethyldithiocarbamate; and zinc dialkyldithio phosphate. One or two or more of these crosslinking accelerators can be used together.

The crosslinking agent is also particularly limited. It includes, for example, sulfur and a bismaleimide compound. One or two or more of these crosslinking agents can be used together.

The kinds of the bismaleimide compound can include, for example, N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, and bis(3-ethyl-5-methyl-4-maleimidephenyl)methane. In the disclosure, N,N'-m-phenylenebismaleimide and N,N'-(4,4'-diphenylmethane)bismaleimide can be preferably used.

The crosslinking coagent includes, for example, zinc oxide (ZnO) and fatty acid. The fatty acid may be any one of saturated or unsaturated, and straight-chain or branched fatty acids, and the number of carbon atoms of the fatty acid is also not particularly limited, but the fatty acid includes, for example, a fatty acid having 1 to 30 carbon atoms, preferably 15 to 30 carbon atoms, more specifically, naphthenic acid such as cyclohexane acid (cyclohexane carboxylic acid) and alkylcyclopentane having a side chain; saturated fatty acid such as hexanoic acid, octanoic acid, decanoic acid (including branched carboxylic acid such as neodecanoic acid), dodecanoic acid, tetradecanoic acid, hexadecanoic acid, and octadecanoic acid (stearic acid); unsaturated fatty acid such as methacrylic acid, oleic acid, linoleic acid, and linolenic acid; and resin acid such as rosin, tall oil acid, and abietic acid. One of them may be used alone, or two or more of them can be used together. In the disclosure, zinc oxide or stearic acid can be preferably used.

My method for manufacturing the rubber composition is not particularly limited, and the rubber composition can be obtained by compounding and kneading the respective components (the rubber component, the silica, and other components) that constitute the rubber composition.

<Tire>

My tire uses the above-described rubber composition. The tire obtained by using the rubber composition as a tire material can have excellent reinforcement property and low loss property.

In my tire, specifically, the above-described rubber composition is applied to any member, but it is particularly preferable that, among such tire members, the rubber composition is applied to a tread. The tire using the rubber composition for the tread can achieve both reinforcement property and low loss property at a high level. A gas with which my tire is filled includes normal air or air whose oxygen partial pressure has been changed, or an inert gas such as nitrogen.

EXAMPLES

The following describes the disclosure in more detail with Example, but the disclosure is not limited in any way to following Example.

<Example 1 and Comparative Examples 1 to 3>

Samples of the rubber compositions of Example and Comparative Examples were fabricated by compounding and kneading with the usual method in accordance with the composition presented in Table 1.

<Evaluation>

The following evaluations were performed on the respective samples of the rubber compositions in Example and Comparative Examples.

(1) Reinforcement property (dynamic storage modulus)

The rubber composition of each sample was vulcanized at 145 °C for 33 minutes to obtain a vulcanized rubber. A sheet with a thickness of 2 mm, a width of 5 mm, and a length of 40 mm was cut out from the obtained vulcanized rubber to be a sample. For this sample, using a spectrometer (made by Ueshima Seisakusho Co., Ltd.), the dynamic storage modulus (E') was measured with a temperature of 24 °C, a strain of 5%, and a frequency of 52 Hz.

The obtained dynamic storage modulus (E') was indicated by an index when the value of Example 1 was 100. The larger the index value, the larger the dynamic storage modulus, indicating the excellence in the reinforcement property. The evaluation result was presented in Table 1.

(2) Low loss property

The rubber composition of each sample was vulcanized at 160 °C for 15 minutes to obtain a vulcanized rubber. For the obtained vulcanized rubber, using the spectrometer (made by Ueshima Seisakusho Co., Ltd.), the loss tangent (tan $\delta$) was measured with a temperature of 24 °C, a dynamic strain of 1%, and a frequency of 52 Hz. The reciprocal of the difference of tan $\delta$ between a strain of 3% and a strain of 0.1% was taken and indexed.

The evaluation was indicated by an index when the reciprocal of the difference of tan $\delta$ of the sample of Example 1 was 100. The smaller the index value, the more excellent the low loss property. The evaluation result was presented

in Table 1

(3) Total evaluation

The above-described evaluation values (index values) for the reinforcement property and the low loss property were summed to calculate the total evaluation.

For the total evaluation, a numerical valued of 180 or more means that both reinforcement property and low loss property are achieved at a high level.

| | | Example 1 | Comparative Example 1 | Comparative Example 2 | Comparative Example 3 |
|---|---|---|---|---|---|
| Composition contents | Natural rubber | 80 | 80 | 80 | 80 |
| | Modified BR *0 | 20 | 20 | - | - |
| | Unmodified BR *1 | - | - | 20 | 20 |
| | Carbon black *2 | 40 | 40 | 40 | 40 |
| | Silica A *3 | 10 | - | 10 | - |
| | Silica B *4 | - | 16 | - | 16 |
| | Silane coupling agent *5 | 1.25 | 1.28 | 1.25 | 1.28 |
| | Stearic acid | 2 | 2 | 2 | 2 |
| | Zinc oxide | 3.5 | 3.5 | 3.5 | 3.5 |
| | Vulcanization accelerator (CBS) *9 | 1.5 | 1.5 | 1.5 | 1.5 |
| | Sulfur | 1 | 1 | 1 | 1 |
| Evaluation result | Reinforcement property | 100 | 103 | 94 | 104 |
| | Low loss property | 100 | 82 | 102 | 74 |
| | Total value | 200 | 185 | 196 | 178 |
| *0 Modified BR manufactured in the following conditions | | | | | |

Into a dry, nitrogen-substituted pressure-resistant glass container with an inner volume of 900-mL, 283 g of cyclohexane, 50 g of 1,3-butadiene monomer, 0.0057 mmol of 2,2-di(tetrahydrofuryl)propane, and 0.513 mmol of hexamethyleneimine were injected each as a cyclohexane solution, 0.57 mmol of n-butyllithium (BuLi) was added to it, and then, polymerization was performed for 4.5 hours in a hot water bath at 50 °C equipped with a stirring device. The polymerization conversion rate was almost 100%. 0.100 mmol of tin tetrachloride was added as a cyclohexane solution to this polymerization system and stirred at 50 °C for 30 minutes. After that, 0.5 ml of isopropanol 5-mass% solution of 2,6-di-t-butylparacresol (BHT) was further added to stop the reaction and moreover, dry it in accordance with the usual method, thus obtaining a modified BR. In the obtained modified BR, the vinyl bond content of the butadiene part was 14%, and the coupling efficiency was 65%.

*1 Asahi Kasei Corp. "Diene NF35R"
*2 "SEAST 7HM" made by Tokai Carbon Co., Ltd.
*3 "Premium SW MP" made by Solvay, CTAB adsorption specific surface area: 250 $m^2/g$, primary particle diameter ($D_I$): 10.91 nm, diameter in the form of aggregates ($D_{CPS}$) measured by disc centrifugal particle size analysis: 82 nm, 6000/CTAB/ρ = 10.91, $D_{CPS}^3/D_I^3$: 424.7
*4 "Nipsil AQ" made by Tosoh Silica Corporation, CTAB adsorption specific surface area: 155 $m^2/g$, primary particle diameter ($D_I$): 17.6 nm, diameter in the form of aggregates ($D_{CPS}$) measured by disc centrifugal particle size analysis: 76 nm, 6000/CTAB/ρ = 17.60, $D_{CPS}^3/D_I^3$: 80.4
** For the diameter in the form of aggregates ($D_{CPS}$) and the primary particle diameter ($D_I$) of silica, silica is added to water at a ratio of 3 wt% and sonicated to obtain a silica suspension, and then, for this sample, using a disc

centrifugal particle size distribution analyzer CPS Disc Centrifuge from CPS Instruments, the particle size distribution is measured at a rotational velocity of 20000 rpm.
*5 "ABC-856" made by Shin-Etsu Chemical Co., Ltd.
*9 N-cyclohexyl-2-benzothiazolylsulfenamide, "NOCCELER® (NOCCELER is a registered trademark in Japan, other countries, or both) CZ-G" made by Ouchi Shinko Chemical Industrial Co., Ltd.

From the result of Table 1, it was found that the sample of Example 1 indicated more excellent values for both of the low loss property and the dynamic storage modulus and had higher total values, compared to the respective samples of Comparative Examples.

INDUSTRIAL APPLICABILITY

We can provide a rubber composition that has achieved both reinforcement property and low loss property at a high level. We can also provide a tire in which both reinforcement property and low loss property have been achieved at a high level.

## Claims

1. A rubber composition comprising a rubber component, carbon black, and silica, wherein

the silica has a CTAB adsorption specific surface area of 250 $m^2/g$ or more;
the silica has a diameter in the form of aggregates ($D_{CPS}$) and a primary particle diameter ($D_I$), as measured by disk centrifugal particle size analysis, that satisfy:

$$700 \geq D_{CPS}^3/D_I^3 \geq 300 \qquad (1);$$

the rubber component contains at least one selected from natural rubber and polyisoprene rubber, and at least one selected from modified butadiene rubber and modified styrene butadiene rubber;
the carbon black is contained by a mass ratio of 70% or more with respect to the total mass content of the carbon black and the silica; and
the at least one selected from modified butadiene rubber and modified styrene butadiene rubber is modified by at least one selected from the group consisting of:
a hydrocarbyloxysilane compound represented by Formula (IV):

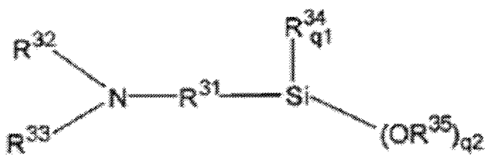

· · · (IV)

[wherein: q1+q2=3 (where q1 is an integer of 0 to 2, and q2 is an integer of 1 to 3); $R^{31}$ represents a divalent aliphatic group or alicyclic hydrocarbon group having 1 to 20 carbon atoms or a divalent aromatic hydrocarbon group having 6 to 18 carbon atoms; $R^{32}$ and $R^{33}$ each independently represent a hydrolyzable group, a monovalent aliphatic group or alicyclic hydrocarbon group having 1 to 20 carbon atoms or a monovalent aromatic hydrocarbon group having 6 to 18 carbon atoms; $R^{34}$, which may be the same or different when the number of q1 is two, represents a monovalent aliphatic group or alicyclic hydrocarbon group having 1 to 20 carbon atoms or a monovalent aromatic hydrocarbon group having 6 to 18 carbon atoms; and $R^{35}$, which may be the same or different when the number of q2 is two or more, represents a monovalent aliphatic group or alicyclic hydrocarbon group having 1 to 20 carbon atoms or a monovalent aromatic hydrocarbon group having 6 to 18 carbon atoms];
a hydrocarbyloxysilane compound represented by Formula (V):

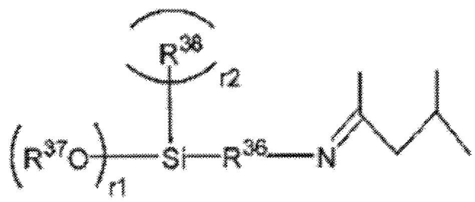

. . . (V)

[wherein: r1+r2=3 (where r1 is an integer of 1 to 3, and r2 is an integer of 0 to 2); $R^{36}$ represents a divalent aliphatic group or alicyclic hydrocarbon group having 1 to 20 carbon atoms or a divalent aromatic hydrocarbon group having 6 to 18 carbon atoms; $R^{37}$, which may be the same or different when the number of r1 is two or more, represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic group or alicyclic hydrocarbon group having 1 to 20 carbon atoms or a monovalent aromatic hydrocarbon group having 6 to 18 carbon atoms; and $R^{38}$, which may be the same or different when the number of r2 is two, represents a hydrocarbyloxy group having 1 to 20 carbon atoms, a monovalent aliphatic group or alicyclic hydrocarbon group having 1 to 20 carbon atoms or a monovalent aromatic hydrocarbon group having 6 to 18 carbon atoms];

a hydrocarbyloxysilane compound represented by Formula (III):

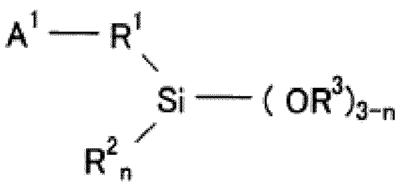

------ (III)

[wherein: $A^1$ represents a monovalent group having at least one functional group selected from (thio)epoxy, (thio)isocyanate, (thio)ketone, (thio)aldehyde, imine, amide, isocyanuric acid trihydrocarbylester, (thio)carboxylate ester, a metallic salt of (thio)carboxylic acid, carboxylic anhydride, carboxylic halide, and dihydrocarbonate carbylester; $R^1$ represents a single bond or a divalent non-active hydrocarbon group; $R^2$ and $R^3$ each independently represent a monovalent aliphatic hydrocarbon group having 1 to 20 carbon atoms or a monovalent aromatic hydrocarbon group having 6 to 18 carbon atoms; n is an integer of 0 to 2; $R^2$ may be the same or different when there are a plurality of $R^2$, $OR^3$ may be the same or different when there are a plurality of $OR^3$, and the molecule does not contain active proton and onium salts];

a coupling agent represented by Formula (VI):

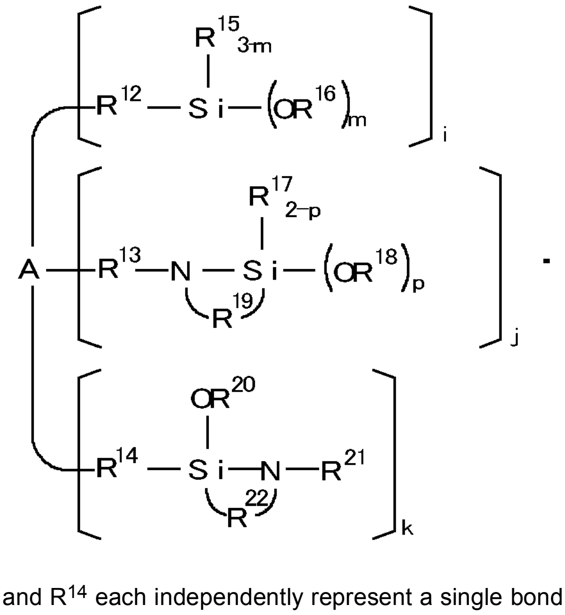

. . . . (VI)

[wherein: $R^{12}$, $R^{13}$, and $R^{14}$ each independently represent a single bond or an alkylene group having 1 to 20

carbon atoms; $R^{15}$, $R^{16}$, $R^{17}$, $R^{18}$, and $R^{20}$ each independently represent an alkyl group having 1 to 20 carbon atoms; $R^{19}$ and $R^{22}$ each independently represent an alkylene group having 1 to 20 carbon atoms; $R^{21}$ represents an alkyl group or trialkylsilyl group having 1 to 20 carbon atoms; m represents an integer of 1 to 3; p represents 1 or 2; $R^{12}$ to $R^{22}$, m and p are independent from one another when there are a plurality thereof; i, j, and k each independently represent an integer of 0 to 6 with (i+j+k) being an integer of 3 to 10; and A represents a hydrocarbon group or an organic group having 1 to 20 carbon atoms, the organic group having at least one atom selected from the group consisting of an oxygen atom, a nitrogen atom, a silicon atom, a sulfur atom, and a phosphorus atom, without having active hydrogen];
a coupling agent represented by Formula (VII):

$$(R_3)_aZX_b \ldots \qquad \text{(VII)}$$

[wherein: Z represents tin or silicon; $(R_3)$ is selected from the group consisting of alkyl having 1 to 20 carbon atoms, cycloalkyl having 3 to 20 carbon atoms, aryl having 6 to 20 carbon atoms, and aralkyl having 7 to 20 carbon atoms; X represents chlorine or bromine; a is 0 to 3, b is 1 to 4, where a+b=4];
lithioamine represented by Formula (VIII):

$$(AM)Li(Q)_y \ldots \qquad \text{(VIII)}$$

[wherein: y is 0 or 0.5 to 3; (Q) is a solubilized component selected from the group consisting of hydrocarbon, ethers, amines, and a mixture thereof; and (AM) is a general formula [I]

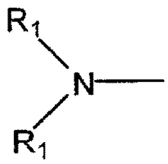 · · · · [I]

(where $R^1$ independently represents an alkyl group having 1 to 12 carbon atoms, a cycloalkyl group, or an aralkyl group) or a general formula [II]

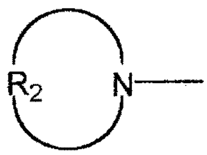 · · · · [II]

(where $(R_2)$ represents: an alkylene group having 3 to 16 methylene groups; a substituted alkylene group having, as a substituent, linear or branched alkyl having 1 to 12 carbon atoms, cycloalkyl, bicycloalkyl, aryl, aralkyl; an oxydiethylene group; or an N-alkylamino-alkylene group)]; and
vinylpyridine.

**2.** The rubber composition according to claim 1, wherein the at least one selected from modified butadiene rubber and modified styrene butadiene rubber is modified by at least one selected from the group consisting of: N,N-bis(trimethylsilyl)-3-[diethoxy(methyl)silyl]propylamine; N-(1,3-dimethylbutylidene)-3-triethoxysilyl-1-propaneamine; 3-glycidoxypropyltrimethoxysilane; tetrakis(3-trimethoxysilylpropyl)-1,3-propanediamine; tin tetrachloride; a reactant of hexamethyleneimine and n-butyllithium; 4-vinylpyridine; and 2-vinylpyridine.

**3.** The rubber composition according to claim 1 or 2, wherein the total content of the carbon black and the silica is 40 to 100 parts by mass per 100 parts by mass of the rubber component.

**4.** A tire comprising the rubber composition according to any one of claims 1 to 3.

## Patentansprüche

**1.** Kautschukzusammensetzung, umfassend eine Kautschukkomponente, Ruß und Siliziumdioxid, wobei

das Siliziumdioxid eine spezifische CTAB-Adsorptionsoberfläche von 250 $m^2/g$ oder mehr aufweist;
das Siliziumdioxid einen Durchmesser in Form von Aggregaten ($D_{CPS}$) und einen Primärteilchendurchmesser ($D_I$) aufweist, die durch eine Scheibenzentrifugalanalyse der Teilchengröße gemessen werden, die erfüllen:

$$700 \geq D_{CPS}^3/D_I^3 \geq 300 \qquad (1);$$

die Kautschukkomponente mindestens einen enthält, ausgewählt aus Naturkautschuk und Polyisoprenkautschuk, und mindestens einen, ausgewählt aus modifiziertem Butadien-Kautschuk und modifiziertem Styrol-Butadien-Kautschuk;
der Ruß in einem Massenverhältnis von 70 % oder mehr, bezogen auf den Gesamtmassengehalt des Rußes und des Siliziumdioxids, enthalten ist; und
der mindestens eine, ausgewählt aus modifiziertem Butadien-Kautschuk und modifiziertem Styrol-Butadien-Kautschuk, durch mindestens eine modifiziert ist, ausgewählt aus der Gruppe, bestehend aus:
einer Kohlenwasserstoffoxysilanverbindung, dargestellt durch Formel (IV):

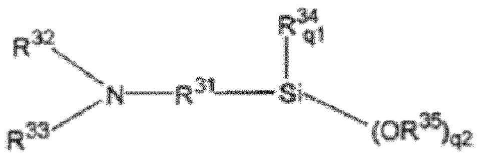

. . . (IV)

[wobei: q1+q2=3 (wobei q1 eine ganze Zahl von 0 bis 2 ist und q2 eine ganze Zahl von 1 bis 3 ist); $R^{31}$ eine zweiwertige aliphatische Gruppe oder alicyclische Kohlenwasserstoffgruppe mit 1 bis 20 Kohlenstoffatomen oder eine zweiwertige aromatische Kohlenwasserstoffgruppe mit 6 bis 18 Kohlenstoffatomen darstellt; $R^{32}$ und $R^{33}$ jeweils unabhängig eine hydrolysierbare Gruppe, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen darstellen; $R^{34}$, das gleich oder verschieden sein kann, wenn die Anzahl von q1 zwei ist, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen darstellt; und $R^{35}$, das gleich oder verschieden sein kann, wenn die Anzahl von q2 zwei oder mehr ist, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen darstellt];
einer Kohlenwasserstoffoxysilanverbindung, dargestellt durch die Formel (V):

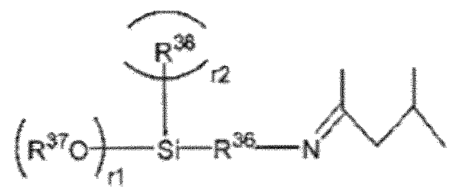

. . . (V)

[wobei: r1+r2=3 (wobei r1 eine ganze Zahl von 1 bis 3 ist und r2 eine ganze Zahl von 0 bis 2 ist); $R^{36}$ eine zweiwertige aliphatische Gruppe oder alicyclische Kohlenwasserstoffgruppe mit 1 bis 20 Kohlenstoffatomen oder eine zweiwertige aromatische Kohlenwasserstoffgruppe mit 6 bis 18 Kohlenstoffatomen darstellt; $R^{37}$, das gleich oder verschieden sein kann, wenn die Anzahl von r1 zwei oder mehr ist, eine Dimethylaminomethylgruppe, eine Dimethylaminoethylgruppe, eine Diethylaminomethylgruppe, eine Diethylaminoethylgruppe, eine Methylsilyl(methyl)aminomethylgruppe, eine Methylsilyl(methyl)aminoethylgruppe, eine Methylsilyl(ethyl)aminomethylgruppe, eine Methylsilyl(ethyl)aminoethylgruppe, eine Dimethylsilylaminomethylgruppe, eine Dimethylsilylaminoethylgruppe, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen darstellt und $R^{38}$, das gleich oder verschieden sein kann, wenn die Zahl von r2 zwei ist, eine Kohlenwasserstoffoxygruppe mit 1 bis 20 Kohlenstoffatomen, eine einwertige aliphatische Gruppe oder alicyclische Kohlenwasserstoffgruppe mit 1 bis 20 Kohlenstoffatomen oder eine einwertige aromatische Kohlenwasserstoffgruppe mit 6 bis 18 Kohlenstoffatomen darstellt];
einer Kohlenwasserstoffoxysilanverbindung, dargestellt durch die Formel (III):

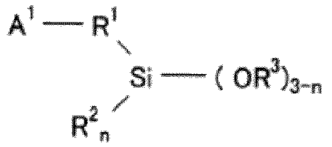 ------ (III)

[wobei: $A^1$ eine einwertige Gruppe mit mindestens einer funktionellen Gruppe, ausgewählt aus (Thio)epoxy, (Thio)isocyanat, (Thio)keton, (Thio)aldehyd, Imin, Amid, Isocyanursäuretrikohlenwasserstoffester, (Thio)carbonsäureester, einem Metallsalz von (Thio)carbonsäure, Carbonsäureanhydrid, Carbonsäurehalogenid und Dihydrocarbonatcarbylester darstellt; $R^1$ eine Einfachbindung oder eine zweiwertige nicht aktive Kohlenwasserstoffgruppe darstellt; $R^2$ und $R^3$ jeweils unabhängig eine einwertige aliphatische Kohlenwasserstoffgruppe mit 1 bis 20 Kohlenstoffatomen oder eine einwertige aromatische Kohlenwasserstoffgruppe mit 6 bis 18 Kohlenstoffatomen darstellen; n eine ganze Zahl von 0 bis 2 ist; $R^2$ gleich oder verschieden sein kann, wenn eine Vielzahl von $R^2$ vorhanden ist, $OR^3$ gleich oder verschieden sein kann, wenn eine Vielzahl von $OR^3$ vorhanden ist, und das Molekül keine aktiven Protonen- und Oniumsalze enthält];
einem Haftvermittler, dargestellt durch Formel (VI):

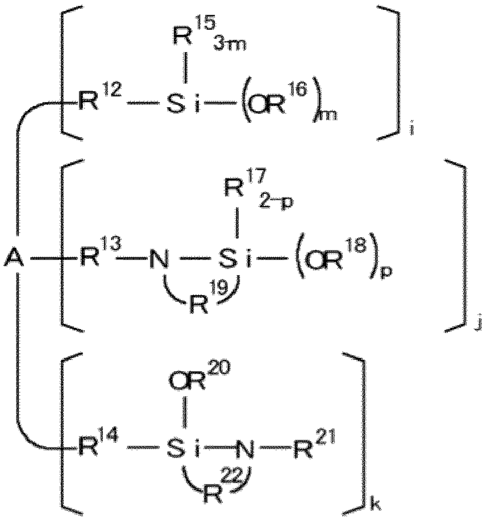 · · · · (VI)

[wobei: $R^{12}$, $R^{13}$ und $R^{14}$ jeweils unabhängig eine Einfachbindung oder eine Alkylengruppe mit 1 bis 20 Kohlenstoffatomen darstellen; $R^{15}$, $R^{16}$, $R^{17}$, $R^{18}$ und $R^{20}$ jeweils unabhängig eine Alkylgruppe mit 1 bis 20 Kohlenstoffatomen darstellen; $R^{19}$ und $R^{22}$ jeweils unabhängig eine Alkylengruppe mit 1 bis 20 Kohlenstoffatomen darstellen; $R^{21}$ eine Alkylgruppe oder Trialkylsilylgruppe mit 1 bis 20 Kohlenstoffatomen darstellt; m eine ganze Zahl von 1 bis 3 darstellt; p 1 oder 2 darstellt; $R^{12}$ bis $R^{22}$, m und p unabhängig voneinander sind, wenn es eine Vielzahl davon gibt; i, j und k jeweils unabhängig eine ganze Zahl von 0 bis 6 darstellen, wobei (i+j+k) eine ganze Zahl von 3 bis 10 ist; und A eine Kohlenwasserstoffgruppe oder eine organische Gruppe mit 1 bis 20 Kohlenstoffatomen darstellt, wobei die organische Gruppe mindestens ein Atom aufweist, ausgewählt aus der Gruppe, bestehend aus einem Sauerstoffatom, einem Stickstoffatom, einem Siliziumatom, einem Schwefelatom und einem Phosphoratom, ohne aktiven Wasserstoff aufzuweisen];
einem Haftvermittler der Formel (VII):

$(R_3)_aZX_b$ --- (VII)

[wobei: Z Zinn oder Silizium darstellt; $(R_3)$ aus der Gruppe ausgewählt ist, bestehend aus Alkyl mit 1 bis 20 Kohlenstoffatomen, Cycloalkyl mit 3 bis 20 Kohlenstoffatomen, Aryl mit 6 bis 20 Kohlenstoffatomen und Aralkyl mit 7 bis 20 Kohlenstoffatomen; X Chlor oder Brom darstellt; a 0 bis 3 ist, b 1 bis 4 ist, wobei a+b=4];
Lithioamin, dargestellt durch Formel (VIII):

$(AM)Li(Q)_y$ --- (VIII)

[wobei: y 0 oder 0,5 bis 3 ist; (Q) eine solubilisierte Komponente ist, ausgewählt aus der Gruppe, bestehend aus Kohlenwasserstoff, Ethern, Aminen und einem Gemisch davon; und (AM) eine allgemeine Formel [I] ist

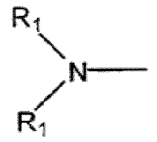 ···· [I]

(wobei $R_1$ unabhängig eine Alkylgruppe mit 1 bis 12 Kohlenstoffatomen, eine Cycloalkylgruppe oder eine Aralkylgruppe darstellt) oder eine allgemeine Formel [II]

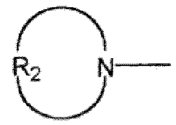 ···· [II]

(wobei ($R_2$) Folgendes darstellt: eine Alkylengruppe mit 3 bis 16 Methylengruppen; eine substituierte Alkylengruppe mit linearem oder verzweigtem Alkyl mit 1 bis 12 Kohlenstoffatomen, Cycloalkyl, Bicycloalkyl, Aryl, Aralkyl als Substituent; eine Oxydiethylengruppe; oder eine N-Alkylaminoalkylengruppe)]; und
Vinylpyridin.

2. Kautschukzusammensetzung nach Anspruch 1, wobei der mindestens eine, ausgewählt aus modifiziertem Butadien-Kautschuk und modifiziertem Styrol-Butadien-Kautschuk, durch mindestens einen modifiziert ist, ausgewählt aus der Gruppe, bestehend aus: N,N-Bis(trimethylsilyl)-3-[diethoxy(methyl)silyl]propylamin; N-(1,3-Dimethylbutyliden)-3-triethoxysilyl-1-propanamin; 3-Glycidoxypropyltrimethoxysilan; Tetrakis(3-trimethoxysilylpropyl)-1,3-propandiamin; Zinntetrachlorid; einem Reaktant von Hexamethylenimin und n-Butyllithium; 4-Vinylpyridin und 2-Vinylpyridin.

3. Kautschukzusammensetzung nach Anspruch 1 oder 2, wobei der Gesamtgehalt an Ruß und Siliziumdioxid 40 bis 100 Masseteile pro 100 Masseteile der Kautschukkomponente beträgt.

4. Reifen, umfassend die Kautschukzusammensetzung nach einem der Ansprüche 1 bis 3.

**Revendications**

1. Composition de caoutchouc comprenant un constituant de caoutchouc, du noir de carbone, et de la silice, dans laquelle

la silice présente une surface spécifique d'adsorption CTAB de 250 $m^2/g$ ou plus ;
la silice présente un diamètre sous la forme d'agrégats ($D_{CPS}$) et un diamètre de particule primaire ($D_I$), tel que mesuré par analyse des tailles de particules sur centrifugeuse à disque, qui satisfont :

$$700 \geq D_{CPS}^3/D_I^3 \geq 300 \qquad (1) ;$$

le constituant de caoutchouc contient au moins l'un sélectionné parmi le caoutchouc d'origine naturelle et le caoutchouc de polyisoprène, et au moins l'un sélectionné parmi le caoutchouc de butadiène modifié et le caoutchouc de styrène butadiène modifié ;
le noir de carbone est contenu sous un rapport en masse de 70 % ou plus par rapport à la teneur en masse totale du noir de carbone et de la silice ; et
l'au moins un sélectionné parmi le caoutchouc de butadiène modifié et le caoutchouc de styrène butadiène modifié est modifié par au moins l'un sélectionné dans le groupe constitué :
d'un composé hydrocarbyloxysilane représenté par la formule (IV) :

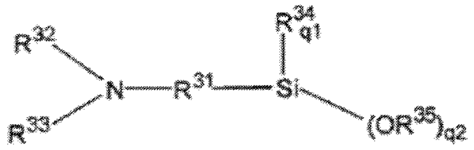 ··· (IV)

[dans laquelle : q1 + q2 = 3 (où q1 est un nombre entier d'une valeur de 0 à 2, et q2 est un nombre entier d'une valeur de 1 à 3) ; $R^{31}$ représente un groupe aliphatique divalent ou un groupe hydrocarboné alicyclique ayant de 1 à 20 atomes de carbone ou un groupe hydrocarboné aromatique divalent ayant de 6 à 18 atomes de carbone ; $R^{32}$ et $R^{33}$ représentent chacun indépendamment un groupe hydrolysable, un groupe aliphatique monovalent ou un groupe hydrocarboné alicyclique ayant de 1 à 20 atomes de carbone ou un groupe hydrocarboné aromatique monovalent ayant de 6 à 18 atomes de carbone ; $R^{34}$, qui peut être identique ou différent lorsque le nombre de q1 est de deux, représente un groupe aliphatique monovalent ou un groupe hydrocarboné alicyclique ayant de 1 à 20 atomes de carbone ou un groupe hydrocarboné aromatique monovalent ayant de 6 à 18 atomes de carbone ; et $R^{35}$, qui peut être identique ou différent lorsque le nombre de q2 est de deux ou plus, représente un groupe aliphatique monovalent ou un groupe hydrocarboné alicyclique ayant de 1 à 20 atomes de carbone ou un groupe hydrocarboné aromatique monovalent ayant de 6 à 18 atomes de carbone] ;
d'un composé hydrocarbyloxysilane représenté par la formule (V) :

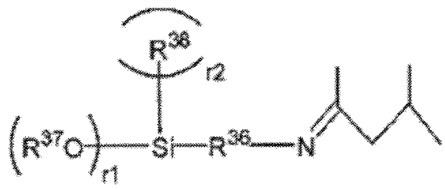

. . . (V)

[dans laquelle : r1 + r2 = 3 (où r1 est un nombre entier d'une valeur de 1 à 3, et r2 est un nombre entier d'une valeur de 0 à 2) ; $R^{36}$ représente un groupe aliphatique divalent ou un groupe hydrocarboné alicyclique ayant de 1 à 20 atomes de carbone ou un groupe hydrocarboné aromatique divalent ayant de 6 à 18 atomes de carbone ; $R^{37}$, qui peut être identique ou différent lorsque le nombre de r1 est de deux ou plus, représente un groupe diméthylaminométhyle, un groupe diméthylaminoéthyle, un groupe diéthylaminométhyle, un groupe diéthylaminoéthyle, un groupe méthylsilyl(méthyl)aminométhyle, un groupe méthylsilyl(méthyl)aminoéthyle, un groupe méthylsilyl(éthyl)aminométhyle, un groupe méthylsilyl(éthyl)aminoéthyle, un groupe diméthylsilylaminométhyle, un groupe diméthylsilylaminoéthyle, un groupe aliphatique monovalent ou un groupe hydrocarboné alicyclique ayant de 1 à 20 atomes de carbone ou un groupe hydrocarboné aromatique monovalent ayant de 6 à 18 atomes de carbone ; et $R^{38}$, qui peut être identique ou différent lorsque le nombre de r2 est de deux, représente un groupe hydrocarbyloxy ayant de 1 à 20 atomes de carbone, un groupe aliphatique monovalent ou un groupe hydrocarboné alicyclique ayant de 1 à 20 atomes de carbone ou un groupe hydrocarboné aromatique monovalent ayant de 6 à 18 atomes de carbone] ;
d'un composé hydrocarbyloxysilane représenté par la formule (III) :

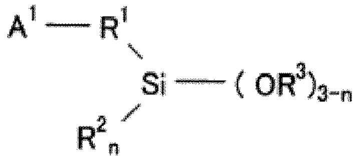

------ (III)

[dans laquelle : $A^1$ représente un groupe monovalent ayant au moins un groupe fonctionnel sélectionné parmi un (thio)époxy, (thio)isocyanate, une (thio)cétone, un (thio)aldéhyde, une imine, un amide, un trihydrocarbylester d'acide isocyanurique, un ester (thio)carboxylate, un sel métallique d'acide (thio)carboxylique, un anhydride carboxylique, un halogénure carboxylique, et un dihydrocarbonate carbylester ; $R^1$ représente une simple liaison ou un groupe hydrocarboné non actif divalent ; $R^2$ et $R^3$ représentent chacun indépendamment un groupe hydrocarboné aliphatique monovalent ayant de 1 à 20 atomes de carbone ou un groupe hydrocarboné aromatique monovalent ayant de 6 à 18 atomes de carbone ; n est un nombre entier d'une valeur de 0 à 2 ; $R^2$ peut être identique ou différent lorsqu'il existe une pluralité de $R^2$, $OR^3$ peut être identique ou différent lorsqu'il existe une pluralité de $OR^3$, et que la molécule ne contient pas de sels actifs de proton et d'onium] ;
d'un agent de couplage représenté par la formule (VI) :

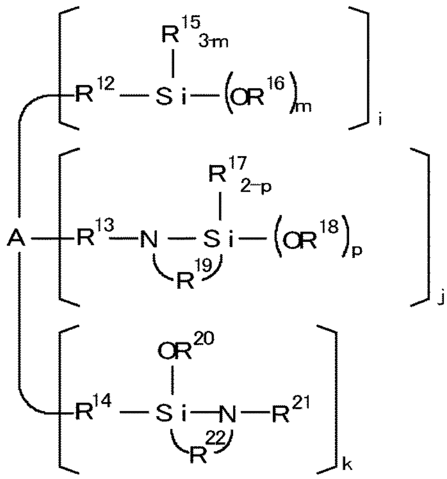 · · · · (VI)

[dans laquelle : $R^{12}$, $R^{13}$, et $R^{14}$ représentent chacun indépendamment une simple liaison ou un groupe alcylène ayant de 1 à 20 atomes de carbone ; $R^{15}$, $R^{16}$, $R^{17}$, $R^{18}$, et $R^{20}$ représentent chacun indépendamment un groupe alkyle ayant de 1 à 20 atomes de carbone ; $R^{19}$ et $R^{22}$ représentent chacun indépendamment un groupe alcylène ayant de 1 à 20 atomes de carbone ; $R^{21}$ représente un groupe alkyle ou un groupe trialkylsilyle ayant de 1 à 20 atomes de carbone ; m représente un nombre entier d'une valeur de 1 à 3 ; p représente 1 ou 2 ; $R^{12}$ à $R^{22}$, m et p sont indépendants l'un de l'autre lorsqu'il existe une pluralité de ceux-ci ; i, j, et k représentent chacun indépendamment un nombre entier d'une valeur de 0 à 6 avec (i + j + k) étant un nombre entier d'une valeur de 3 à 10 ; et A représente un groupe hydrocarboné ou un groupe organique ayant de 1 à 20 atomes de carbone, le groupe organique ayant au moins un atome sélectionné dans le groupe constitué d'un atome d'oxygène, d'un atome d'azote, d'un atome de silicium, d'un atome de soufre, et d'un atome de phosphore, sans avoir d'hydrogène actif] ;
d'un agent de couplage représenté par la formule (VII) :

$$(R_3)_aZX_b \text{ ---} \qquad \text{(VII)}$$

[dans laquelle : Z représente de l'étain ou du silicium ; $(R_3)$ est sélectionné dans le groupe constitué d'un alkyle ayant de 1 à 20 atomes de carbone, un cycloalkyle ayant de 3 à 20 atomes de carbone, aryle ayant de 6 à 20 atomes de carbone, et aralkyle ayant de 7 à 20 atomes de carbone ; X représente le chlore ou le brome ; a est de 0 à 3, b est de 1 à 4, où a + b = 4] ;
d'une lithioamine représentée par la formule (VIII) :

$$(AM)Li(Q)_y \text{ ---} \qquad \text{(VIII)}$$

[dans laquelle : y est de 0 ou 0,5 à 3 ; (Q) est un constituant solubilisé sélectionné dans le groupe constitué d'un hydrocarbone, d'éthers, d'amines, et d'un mélange de ceux-ci ; et (AM) est une formule générale [1]

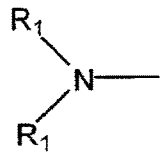 · · · · [I]

(où $R_1$ représente indépendamment un groupe alkyle ayant de 1 à 12 atomes de carbone, un groupe cycloalkyle, ou un groupe aralkyle) ou une formule générale [II]

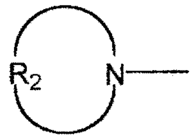 · · · · [II]

(où ($R_2$) représente : un groupe alcylène ayant de 3 à 16 groupes méthylènes ; un groupe alcylène substitué ayant, comme substituant, un groupe alkyle linéaire ou ramifié ayant de 1 à 12 atomes de carbone, cycloalkyle, bicycloalkyle, aryle, aralkyle ; un groupe oxydiéthylène ; ou un groupe N-alkylamino-alcylène)] ; et vinylpyridine.

**2.** Composition de caoutchouc selon la revendication 1, dans laquelle l'au moins un sélectionné parmi le caoutchouc de butadiène modifié et le caoutchouc de styrène butadiène modifié est modifié par au moins l'un sélectionné dans le groupe constitué : de la N,N-bis(triméthylsilyl)-3-[diéthoxy(méthyl)silyl]propylamine ; N-(1,3-diméthylbutylidène)-3-triéthoxysilyl-1-propaneamine ; du 3-glycidoxypropyltriméthoxysilane ; de la tétrakis(3-triméthoxysilylpropyl)-1,3-propanediamine ; du tétrachlorure d'étain ; d'un réactif d'hexaméthylèneimine et de n-butyllithium ; de la 4-vinylpyridine ; et de la 2-vinylpyridine.

**3.** Composition de caoutchouc selon la revendication 1 ou 2, dans laquelle la teneur totale du noir de carbone et de la silice est de 40 à 100 parties en masse pour 100 parties en masse du constituant de caoutchouc.

**4.** Pneumatique comprenant la composition de caoutchouc selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011140612 A